# EUROPÄISCHE PATENTSCHRIFT

(11) **EP 2 395 176 B1**
(45) Veröffentlichungstag und Bekanntmachung des Hinweises auf die Patenterteilung: **03.09.2014**
(21) Anmeldenummer: 11168813.1
(22) Anmeldetag: 06.06.2011
(51) Int. Cl.: E04F 10/06, G03B 21/56, G03B 21/10, G03B 21/58, G03B 29/00, H04R 1/02

(54) **Markise mit Tonerzeugungssystem für Musik -oder Sprache**
Awning comprising a sound generation system for music or voice signals
Marquise comprenant un système générateur de son pour des signaux musicaux ou vocaux

(30) Priorität: 09.06.2010 DE 102010029879
(43) Veröffentlichungstag der Anmeldung: 14.12.2011
(73) Patentinhaber: Schmitz-Werke GmbH + Co. KG, 48282 Emsdetten (DE)
(72) Erfinder: Wensing, Marius, 48720 Rosendahl (DE); Hölker, Daniel, 48341 Altenberge (DE); Schöttler, Günter, 48282 Emsdetten (DE)
(74) Vertreter: Rau, Schneck & Hübner Patentanwälte Rechtsanwälte PartGmbB

(56) Entgegenhaltungen:
- DE-A1- 10 223 063
- DE-A1- 10 244 253
- DE-U1-202004 021 124
- US-A- 2 583 824

## Beschreibung

Die Erfindung betrifft eine Markise mit einem an einem Gebäudeteil anbringbaren Basisteil, einer daran vorzugsweise mittels eines Motors drehangetriebenen Tuchwelle und einem auf die Tuchwelle auf- und davon abwickelbaren, ein- und ausfahrbaren Markisentuch. Unter Basisteil soll dabei jedwede Komponente verstanden werden, mit deren Hilfe die Markise beispielsweise in Form einer Gelenkarm-, Wintergarten- oder Fenstermarkise an einem Gebäudeteil, wie einer Außenwand, einem Wintergarten oder einer Fensterlaibung befestigt werden kann. Typischerweise sind solche Basisteile bauartbedingt Markisengehäuse, Befestigungskonsolen, Halterahmen oder dergleichen.

Zum Hintergrund der Erfindung ist festzuhalten, dass Markisen bevorzugt in Bereichen der Erholung und Entspannung, wie Terrassen und Balkonen eingesetzt werden. In diesem Zusammenhang wird es zunehmend gewünscht, möglichst multimedial versorgbar zu sein. Dazu ist es bereits bekannt, Markisen beispielsweise im Bereich ihrer Ausfallprofile mit Lautsprechern zur Beschallung des unterhalb der Markise befindlichen Raumes zu bestücken. Alternative Realisierungsformen sehen die Anbringung von Lautsprecherboxen über Konsolen beispielsweise am Markisengehäuse vor.

Nachteilig bei derartigen bekannten Lösungen ist die Tatsache, dass zur Erzeugung einer befriedigenden Klangqualität und eines ausreichenden Tonvolumens für die Beschallung im Freien relativ aufwendige Lautsprechersysteme verwendet werden müssten, was in der Regel mit der Integrierbarkeit in Markisenbauteile oder Anbringbarkeit an der Markise kollidiert.

Aus der DE 102 23 063 A1 ist eine Sonnenschutzvorrichtung mit einem motorisch ein- und ausfahrbaren flächigen Sonnenschutzmittel, wie beispielsweise eine Markise bekannt, bei der der Sonnenschutzvorrichtung ein Schwingungsgenerator zugeordnet ist. Dessen Schwingungen im Ultraschallbereich sollen Ungeziefer und insbesondere stechende Insekten vertreiben.

Ausgehend von den geschilderten Problemen des Standes der Technik liegt der Erfindung die Aufgabe zugrunde, eine Markise so zu verbessern, dass sie multimediale Aufgaben möglichst optimal erfüllt.

Diese Aufgabe wird laut Kennzeichnungsteil des Anspruchs 1 durch ein Tonerzeugungssystem gelöst, das eine Treibersteuerung und mindestens einen davon angesteuerten, mit einem Markisenbauteil gekoppelten Schallaktor aufweist. Dieser mindestens eine Schallaktor versetzt das Markisenbauteil in definierte Schwingungen zur Abgabe eines Schallsignals, insbesondere eines Musik- und/oder Sprachsignals.

Im Gegensatz zu den aus dem Stand der Technik bekannten Lautsprechern wird also als tonerzeugendes Element direkt ein Bauteil der Markise, wie beispielsweise eine Fläche des Ausfallprofils, das Markisentuch selbst oder eine Wand des Markisengehäuses benutzt, welches Bauteil über den Schallaktor in entsprechende Schwingungen versetzt wird. Bei der Umsetzung dieses technischen Ansatzes kann dabei auf die umfangreichen Erfahrungen mit adaptiven Audio-Systemen zurückgegriffen werden, wie sie beispielsweise von dem Unternehmen Bose® im Zusammenhang mit seiner "Acoustic Waveguide Technology" oder dem "ADAPTiQ®" - Audio-Kalibriersystem vorliegen.

Je nach Ansprüchen an die Klangqualität und das Klangvolumen können mehrere Schallaktoren zur Beaufschlagung eines oder mehrerer Markisenbauteile vorgesehen sein.

Unter der erfindungsgemäß vorgesehenen Treibersteuerung soll im Übrigen das für die Ansteuerung des oder der Schallaktoren vorgesehene Herzstück des Tonerzeugungssystems verstanden werden, das entsprechend üblicher Audiosysteme zumindest eine Signalerzeugungskomponente zur Erzeugung von analogen bzw. digitalen Tonsteuersignalen aufweist, mit denen eine Leistungsendstufe angesteuert wird. Diese versorgt dann die Schallaktoren mit den eigentlichen Musik- bzw. Sprachsteuersignalen, um das jeweilige Markisenbauteil in seine definierten Schwingungen zu versetzen. Die Versorgung der Treibersteuerung mit den entsprechenden Tonsteuersignalen kann auf allen bekannten Wegen, wie leitungsgebunden, über WLAN, kurzreichweitige Funkstandards, wie Bluetooth oder auch durch Andocken eines Speicherbausteins über eine Schnittstelle, wie etwa einen USB-Anschluss erfolgen. Über letzteren können beispielsweise die derzeit üblichen MP3-Player, iPods oder iPhones angeschlossen werden.

Durch die vorzugsweise vorgesehene Verwendung mehrerer Schallaktoren in definierter Ankopplung an mehreren Markisenbauteilen können qualitativ hochwertige Klangbilder, wie Stereo- oder Dolbi®-Surround-Klang erzeugt werden.

Zur umfassenden multimedialen Nutzung einer Markise kann diese gemäß einer Weiterbildung mit einer Bild-Projektionsfläche versehen werden, bei der es sich vorzugsweise um ein vom Ausfallprofil nach unten abhängendes Leinwandelement handeln kann. Dafür kann grundsätzlich ein von der Anmelderin als Sonderausstattung unter der Bezeichnung "Schatten Plus" angebotene Zusatz-Vorhang verwendet werden, der über eine zusätzliche Wickelwelle im Ausfallprofil ein- und ausfahrbar ist. Dieser Zusatzvorhang muss als Leinwandelement lediglich zumindest auf der Innenseite mit einer homogen lichtreflektierenden Beschichtung oder Stofflage versehen sein.

Als besonders bevorzugte Weiterbildung einer Markise im Zusammenhang mit der Projektionsfläche als Zusatzeinrichtung bietet sich die Integration einer entsprechenden Projektionseinrichtung in die Markise an. Nach aktuellem Stand der Technik handelt es sich dabei in erster Linie um einen Beamer, mit dessen Hilfe Stand- und Bewegtbilder auf der Projektionsfläche erzeugbar sind. Bei einer entsprechenden Vollausrüstung einer Markise mit Tonerzeugungssystem, Projektionseinrichtung und Projektionsfläche realisiert diese Markise ein autarkes Multimedia-System, das gerade in Zeiten der Erholung und Entspannung auf einer Terrasse oder einem Balkon optimal genutzt werden kann.

Weitere Merkmale, Einzelheiten und Vorteile der Erfindung ergeben sich aus der nachfolgenden Beschreibung eines Ausführungsbeispiels anhand der beigefügten Zeichnungen. Es zeigen:
- Fig. 1: eine Rückansicht einer Markise in teilweise geöffnetem Zustand, sowie
- Fig. 2 und 3: vergrößerte Detailansichten der Einzelheiten E und F gemäß Fig. 1.

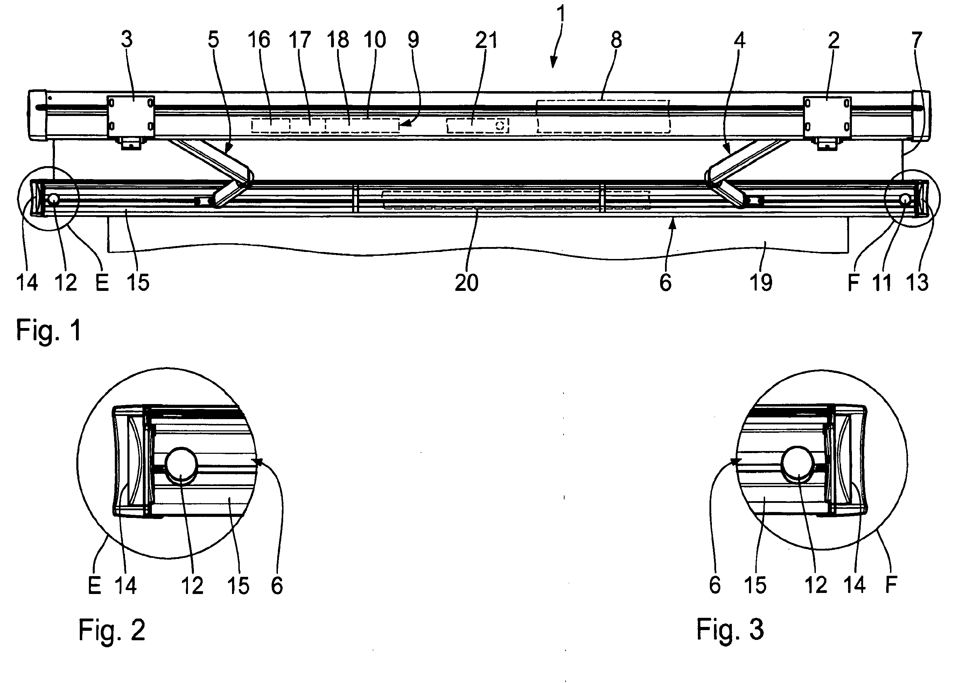

Wie aus Figur 1 deutlich wird, weist die gezeigte Gelenkarmmarkise als ein Basisteil das Markisengehäuse 1 auf, das über entsprechende Konsolen 2, 3 an ein nicht näher dargestelltes Gebäudeteil, wie eine Gebäudeaußenwand montierbar ist.

Weitere Basisteile der Markise sehen zwei Gelenkarmpaare 4, 5 vor, die mit ihren inneren Enden am Markisengehäuse 1 angelenkt sind. Ihre freien Enden tragen das Ausfallprofil 6 als weiteres Basisteil der Markise, an dem das vordere Ende des Markisentuches 7 befestigt ist. Letzteres wird üblicherweise beim Einfahren der Markise auf die strichliert dargestellte Tuchwelle 8 im Markisengehäuse 1 aufgewickelt.

Die dargestellte Markise ist als Multi-Media-Markise konzipiert. Dazu ist ein als Ganzes mit 9 bezeichnetes Tonerzeugungssystem vorgesehen, das aus einer im Markisengehäuse 1 untergebrachten Treibersteuerung 10 und zwei Schallaktoren 11, 12 besteht. Letztere sind in dem gezeigten Ausführungsbeispiel an den beiden äußeren Enden 13, 14 des Ausfallprofils 6 mechanisch angekoppelt. Es kann sich dabei um piezoelektrische Schwingungserreger handeln, die die entsprechende Frontwand 15 des Ausfallprofils 6 in definierte Schwingungen zur Abgabe eines Schallsignals, wie eines Musik- und Sprachsignals versetzen. Die entsprechend erzeugten Töne und Klänge können dann insbesondere unterhalb der Markise in dem davon beschatteten Ruhebereich wahrgenommen werden.

Die Treibersteuerung 10 weist beispielsweise ein WLAN-Empfangsteil 16 auf, mit dem drahtlos analoge bzw. insbesondere digitale Tonsteuersignale empfangen werden können. Diese Tonsteuersignale können beispielsweise von einer hausinternen PC-Anlage übermittelt werden. Diese Signale werden in einem Prozessorteil 17 verarbeitet, um eine Endstufe 18 so anzusteuern, dass diese definierte Leistungssignale an die Schallaktoren 11, 12 über nicht näher dargestellte Leitungsverbindungen abgibt.

Zur Bereitstellung einer Bild-Projektionsfläche ist die Markise ferner mit einem Leinwandelement 19 versehen, dass auf eine zusätzliche Wickelwelle 20 im Ausfallprofil 6 auf- und davon abwickelbar ist. Das Leinwandelement 19 kann so nach unten ausgefahren werden, sodass es von Ausfallprofil 6 vertikal nach unten abhängt.

Als Projektionseinrichtung ist schließlich in das Markisengehäuse 1 ein Beamer 21 integriert, der beispielsweise über das WLAN-Empfangsteil 16 des Tonerzeugungssystems 9 mit entsprechenden Bildsignalen versorgbar ist. Der Beamer 21 projektiert auf das Leinwandelement 19 dann die entsprechenden Bilder oder Filme.

## Patentansprüche

1. Markise umfassend
- ein an einem Gebäudeteil anbringbares Basisteil (1),
- eine daran drehbar gelagerte Tuchwelle (8), und
- ein auf die Tuchwelle (8) auf- und davon abwickelbares, ein- und ausfahrbares Markisentuch (7),
**gekennzeichnet durch**
- ein Tonerzeugungssystem (9), das eine Treibersteuerung (10) und mindestens einen davon angesteuerten, mit einem Markisenbauteil (6) gekoppelten Schallaktor (11, 12) aufweist, wobei der mindestens eine Schallaktor (11, 12) das Markisenbauteil (6) in definierte Schwingungen zur Abgabe eines Schallsignals in Form eines Musik- und/oder Sprachsignals versetzt.

2. Markise nach Anspruch 1, **dadurch gekennzeichnet, dass** mehrere Schallaktoren (11, 12) zur Beaufschlagung eines oder mehrerer Markisenbauteile (6) vorgesehen sind.

3. Markise nach einem der vorgenannten Ansprüche, **dadurch gekennzeichnet, dass** das Basisteil in Form eines Markisengehäuses (1), das Markisentuch (7) und/oder ein Ausfallprofil (6) der Markise mit einem Schallaktor (11, 12) gekoppelt sind.

4. Markise nach einem der vorgenannten Ansprüche, **dadurch gekennzeichnet, dass** die Treibersteuerung (9) über leitungsgebundene und/oder drahtlose Kommunikationswege (16) mit analogen und/oder digitalen Tonsteuersignalen in Form von Musik- und/oder Sprachsteuersignalen versorgbar ist.

5. Markise nach einem der vorgenannten Ansprüche, **dadurch gekennzeichnet, dass** mehrere Schallaktoren (11, 12) so mit mehreren Markisenbauteilen (6, 13, 14) gekoppelt sind, dass diese gemeinsam Stereo- oder Surround-Schallsignale abgeben.

6. Markise nach einem der vorgenannten Ansprüche, **dadurch gekennzeichnet, dass** die Markise mit einer Bild-Projektionsfläche (19) versehen ist.

7. Markise nach Anspruch 6, **dadurch gekennzeichnet, dass** die Bild-Projektionsfläche von einer vom Ausfallprofil (6) der Markise nach unten abhängenden Leinwandelement (19) gebildet ist.

8. Markise nach Anspruch 7, **dadurch gekennzeichnet, dass** das Leinwandelement (19) mittels einer Wickelwelle (20) im Ausfallprofil (6) ein- und ausfahrbar ist.

9. Markise insbesondere nach einem der Ansprüche 6 bis 8, **dadurch gekennzeichnet, dass** eine Projektionseinrichtung (21) in die Markise integriert ist.

10. Markise mindestens nach Anspruch 9, **dadurch gekennzeichnet, dass** die Projektionseinrichtung ein in das Markisengehäuse (1) integrierter Beamer (21) ist.

## Claims

1. Awning comprising
- a base part (1), which can be attached to a building part,
- a fabric shaft (8) rotatably mounted thereon, and
- an awning fabric (7), which can be retracted and extended and can be wound onto the fabric shaft (8) and unwound therefrom,
**characterised by**
- a sound production system (9), which has a driver controller (10) and at least one sound actuator (11, 12) activated thereby and coupled to an awning component (6), wherein the at least one sound actuator (11, 12) causes the awning component (6) to carry out defined oscillations to emit a sound signal in the form of a music and/or speech signal.

2. Awning according to claim 1, **characterised in that** a plurality of sound actuators (11, 12) is provided to act on one or more awning components (6).

3. Awning according to either of the preceding claims, **characterised in that** the base part in the form of an awning housing (1), the awning fabric (7) and/or a drop out profile (6) of the awning are coupled to a sound actuator (11, 12).

4. Awning according to any one of the preceding claims, **characterised in that** the driver controller (9) can be supplied by line-bound and/or wireless communication paths (16) with analogue and/or digital sound control signals in the form of music and/or speech control signals.

5. Awning according to any one of the preceding claims, **characterised in that** a plurality of sound actuators (11, 12) is coupled to a plurality of awning components (6, 13, 14) in such a way that they together emit stereo or surround sound signals.

6. Awning according to any one of the preceding claims, **characterised in that** the awning is provided with an image projection surface (19).

7. Awning according to claim 6, **characterised in that** the image projection surface is formed by a screen element (19) hanging down from the drop out profile (6) of the awning.

8. Awning according to claim 7, **characterised in that** the screen element (19) can be retracted and extended by means of a winding shaft (20) in the drop out profile (6).

9. Awning in particular according to any one of claims 6 to 8, **characterised in that** a projection device (21) is integrated into the awning.

10. Awning at least according to claim 9, **characterised in that** the projection device is a beamer (21) integrated into the awning housing (1).

## Revendications

1. Marquise comprenant
- une partie de base (1) pouvant être rapportée sur un corps de bâtiment,
- un arbre (8) de toile, pouvant être mis en rotation, y étant logé, et
- une toile (7) de marquise pouvant être enroulée et déroulée sur l'arbre (8) de toile, pouvant être rentrée et sortie,
**caractérisée par**
- un système générateur de son (9), qui présente un dispositif de commande d'attaque (10) et au moins un actionneur pour le son (11, 12) couplé avec un constituant (6) de la marquise, commandé par celui-ci, l'actionneur pour le son (11, 12) plaçant au moins le constituant (6) de la marquise dans des mouvements d'oscillations définis pour la délivrance d'un signal sonore sous la forme d'un signal de musique et/ou d'un signal vocal.

2. Marquise selon la revendication 1, **caractérisée en ce que** plusieurs actionneurs pour le son (11, 12) sont prévus pour mettre en oeuvre un ou plusieurs constituants (6) de la marquise.

3. Marquise selon l'une des revendications précitées, **caractérisée en ce que** la partie de base sous la forme d'un boîtier (1) de marquise, la toile (7) de marquise et/ou le profilé de retombée (6) de la marquise sont couplés avec un actionneur pour le son (11, 12).

4. Marquise selon l'une des revendications précitées, **caractérisée en ce que** le dispositif de commande d'attaque (9) peut être alimenté par des méthodes de communication (16) filaires et/ou sans fil comportant des signaux de commande de son analogiques et/ou numériques sous la forme de signaux de commande musicaux et/ou vocaux.

5. Marquise selon l'une des revendications précitées, **caractérisée en ce que** plusieurs actionneurs pour le son (11, 12) sont couplés avec plusieurs constituants (6, 13, 14) de la marquise de telle manière que ceux-ci émettent ensemble des signaux sonores en stéréo ou multicanal.

6. Marquise selon l'une des revendications précitées, **caractérisée en ce que** la marquise est munie d'une surface de projection (19) d'images.

7. Marquise selon la revendication 6, **caractérisée en ce que** la surface de projection d'images est formée par un élément d'écran (19) du profilé de retombée (6) de la marquise pendant vers le bas.

8. Marquise selon la revendication 7, **caractérisée en ce que** l'élément d'écran (19) peut être rentré ou déployé dans le profilé de retombée (6) au moyen d'un arbre d'enroulement (20).

9. Marquise, notamment selon l'une des revendications 6 à 8, **caractérisée en ce qu'**un dispositif de projection (21) est intégré dans la marquise.

10. Marquise selon au moins la revendication 9, **caractérisée en ce que** le dispositif de projection est un vidéoprojecteur (21) intégré dans le boîtier (1) de la marquise.
